# EUROPÄISCHE PATENTSCHRIFT

(11) **EP 1 230 103 B1**
(45) Veröffentlichungstag und Bekanntmachung des Hinweises auf die Patenterteilung: **28.12.2005**
(21) Anmeldenummer: 00972822.1
(22) Anmeldetag: 20.10.2000
(51) Int. Cl.: B60N 2/56

(54) **VERFAHREN UND VORRICHTUNG EINER EINRICHTUNG ZUR KLIMATISIERUNG EINES FAHRZEUGSITZES SOWIE BEDIENEINRICHTUNG DAFÜR**
METHOD AND DEVICE PERTAINING TO A DEVICE FOR AIR CONDITIONING VEHICLE SEATS AND OPERATING UNIT THEREFOR
PROCEDE ET DISPOSITIF DE COMMANDE D'UN SYSTEME DE CLIMATISATION D'UN SIEGE DE VEHICULE

(30) Priorität: 06.11.1999 DE 19953385
(43) Veröffentlichungstag der Anmeldung: 14.08.2002
(73) Patentinhaber: Volkswagen Aktiengesellschaft, 38436 Wolfsburg (DE)
(72) Erfinder: WOLLENHAUPT, Ralf, 38350 Helmstedt (DE); PIETSCH, Matthias, 38154 Königslutter (DE); MICHNIACKI, Matthias, 38440 Wolfsburg (DE)
(86) Internationale Anmeldenummer: PCT/EP2000/010341
(87) Internationale Veröffentlichungsnummer: WO 2001/034430

(56) Entgegenhaltungen:
- WO-A-96/25301
- WO-A-99/27430
- DE-A- 3 304 419
- DE-A- 4 141 224
- DE-A- 4 308 119

## Beschreibung

Die Erfindung betrifft ein Verfahren sowie eine Einrichtung zur Steuerung der Klimatisierung eines Kraftfahrzeugsitzes, bei welchem der Sitz sowohl beheizt, als auch mittels Ventilationseinrichtung durchlüftet werden kann, gemäß Oberbegriff der Patentansprüche 1, 2, 4 und 5.

Verfahren und Einrichtungen dieser Art sind bereits bekannt. Historisch entstammen Sitzheizungen der Maßgabe, das Passagiergefühl auch in offenen Fahrzeugen angenehmer zu gestalten. Eine weitere Maßgabe entstand dadurch, eine Sitzbeheizung zu dem Zweck zu schaffen, die Anheizzeit der ansonsten trägen Heizanlage in Kraftfahrzeugen durch die Beheizung der Sitze zu überbrücken. Heutzutage sind Fahrzeugsitzbeheizungen ein übliches Ausstattungsmerkmal, was den Sitzkomfort erhöhen soll. Darüber hinaus gibt es jedoch auch Maßgaben, die sich aus der Tatsache ergeben, daß Kraftfahrzeuge in unseren Klimazonen zu allen Jahreszeiten betrieben werden.

In den Sommermonaten werden die Kraftfahrzeuge üblicherweise klimatisiert, um ein erträgliches Klima im Fahrgastraum zu erhalten. So ist es darüber hinausgehend bekannt, Fahrzeugsitze nicht nur beheizbar zu gestalten, sondern auch klimatisierbar.

Man kennt beim Fahrbetrieb während der Sommermonate oftmals Situationen, bei denen die Witterungsverhältnisse und die Temperaturen zu einer erhöhten Schweißbildung führen. Dies führt in Kraftfahrzeugen oftmals zu dem Effekt des sog. nassen Rückens, insbesondere auf längeren Fahrten. Davon ausgehend ist es des weiteren bekannt, Fahrzeugsitze in der bereits genannten Weise nicht nur zu beheizen, sondern auch zu belüften. Zum einen kommt es darauf an, die Feuchtigkeit zwischen Passagier und Fahrzeugsitz abzutransportieren, und zum anderen eine angenehme Fahrzeugsitztemperatur zu erreichen.

Aus der DE 197 03 516 C1 ist ein Fahrzeugsitz bekannt, der mit einer Ventilationseinrichtung zur Polsterbelüftung sowie mit einer Heizeinrichtung zur Polstererwärmung versehen ist. Zur Sicherstellung eines hohen Sitzklimakomforts, das zum einen das Schwitzen und zum anderen das Unterkühlen des Sitzbenutzers ausschließt, ist ein Steuerungsgerät vorgesehen, das eingangsseitig mit einem im Polster angeordneten Temperaturfühler und ausgangsseitig mit den elektrischen Schaltkreisen von Ventilations- und Heizeinrichtung verbunden ist. Hierbei wird also die Sitzkühlung sowie die Sitzbeheizung vollständig und automatisch geregelt.

Aus der WO 96/25301 ist ein Klimasitz bekannt, bei dem die Innenseite der Sitzkontaktfläche durch eine Luftkonditioniereinrichtung konditionierte Luft hindurchläßt. Ein elektrisches Heizelement ist zur Erwärmung der Sitzkontaktfläche im Bereich der Innenseite der Sitzkontaktfläche angeordnet. Eine Temperaturfühleinrichtung erfasst die Temperatur im Bereich der Sitzkontaktfläche. Um unabhängig von den Umgebungsbedingungen eine schnelle Einstellung der Sitztemperatur auf eine gegebene Wunschtemperatur zu erreichen, ist eine Regeleinrichtung vorgesehen, die sowohl mit der Luftkonditioniereinrichtung, als auch mit dem elektrischen Heizelement in Verbindung steht, und diese entsprechend einem vorgegebenen Temperatursollwert in Abhängigkeit von der mit der Temperaturfühleinrichtung gemessenen Temperatur regelt. Auch hierbei ist keine Einflußnahme des Passagiers auf diesen automatischen Betrieb möglich.

Aus der EP 0 809 576 A1 ist ein ebensolcher Klimasitz bekannt, der die Vollklimatisierung automatisch geregelt vornimmt.

Zur Sitzklimatisierung sind in Realisierung weitere Möglichkeiten angegeben, wie beispielsweise aus der WO98/55340, bei der eine Sitzklimatisierungsvorrichtung einen unter einer Sitzfläche angeordneten luftdurchlässigen Grundkörper aufweist und ein in dem Grundkörper oder zwischen der Sitzfläche und dem Grundkörper angeordnetes Heizelement. Der Grundkörper und das Heizelement sind mattenartig ausgebildet und im wesentlichen zueinander parallel orientiert, und in Bezug auf die Flächenerstreckung im wesentlichen gleich groß. Die letztendliche Luftdurchlässigkeit schafft hier die Klimatisierung bzw. die Zugänglichmachung von Luftdurchströmung.

Aus der DE 197 52 135 ist ein Verfahren zur temperaturabhängigen Regelung des Heizstromes einer Sitzheizung mit einem Sensorelement zur Temperaturerfassung bekannt, wobei nach Einschalten der Sitzheizung der Sensor die Temperatur registriert, in Abhängigkeit von der Differenz der Sensortemperatur zu einem Vergleichswert eine Heizphasendauer festgelegt, und anschließend für diese Zeit für eine Heizphase eingeschaltet wird. Dies betrifft im wesentlichen die Beheizung des Sitzes, läßt aber den Aspekt der Vollklimatisierung, also auch der Durchlüftung und ggf. der Kühlung völlig außer acht.

Somit entsteht insgesamt der Nachteil, daß bei den vorstehend genannten Lösungen das subjektive Empfinden der auf dem Sitz befindlichen Person völlig unbeachtet gelassen wird. Eine Einflußnahme auf direkte Art wird vermieden, und statt dessen eine vollständige temperaturgeregelte Führung des Systems präferiert. Es bleibt jedoch als bedenklich zu erachten, daß eine unkontrollierte, und das subjektive Empfinden der besagten Person nicht berücksichtigende Kühlung des Sitzes zu gesundheitlichen Konsequenzen oder sogar Schäden führen kann. Von daher sind ausschließlich vollautomatisch geregelte, wenngleich auch temperaturgeregelte Systeme, eine nur unzureichende Lösung.

Davon ausgehend liegen den genannten Verfahren und Einrichtungen der gattungsgemäßen Art die Aufgabe zugrunde, die Klimatisierung eines Fahrzeugsitzes mehr auf die individuellen, subjektiven Bedürfnisse der betreffenden Personen hin anpaßbar zu gestalten.

Die gestellte Aufgabe ist im Hinblick auf erfindungsgemäße Verfahren durch die kennzeichnenden Merkmale der Patentansprüche 1 und/oder 2 gelöst.

In weiterer vorteilhafter Ausgestaltung der erfindungsgemäßen Verfahren ist eine Ausgestaltung gemäß Anspruch 3 angegeben.

Im Hinblick auf erfindungsgemäße Einrichtungen ist die gestellte Aufgabe durch die kennzeichnenden Merkmale der Patentansprüche 4 und/oder 5 gelöst. Weitere vorteilhafte Ausgestaltungen in einrichtungsgemäßer Weise sind in den abhängigen Ansprüchen 6-8 angegeben.

Im Hinblick auf den verfahrensgemäßen Teil der Erfindung gibt es zwei Ausgestaltungsweisen gemäß den unabhängigen Ansprüchen 1 und 2. Dabei ist Kern der Erfindung zum einen, dass die Ventilationseinrichtung gesondert, manuell betätigt wird, und der Betrieb der Sitzheizung automatisch, in Abhängigkeit von der Oberflächentemperatur geregelt wird.

Im Hinblick auf ein unabhängiges Verfahren nach Anspruch 2 ist Kern der Erfindung, daß die Sitzheizung gesondert manuell betätigt wird und der Betrieb der Ventilation automatisch, in Abhängigkeit von der Oberflächentemperatur geregelt wird.

Beide Verfahren geben alternative Vorgehensweisen vor, die jedoch übergeordnet die erfindungsgemäße Grundlehre enthalten, daß bei der Kombination von Ventilationseinrichtung und Sitzheizung als Gesamtklimatisierungskonzept eines der beiden manuell betätigt wird, und das jeweils andere dann temperaturabhängig automatisch geregelt wird. In beiden Fällen erfolgt eine wirksame Eingriffnahme durch die betreffende Person und gestattet somit die Berücksichtigung individueller, subjektiver Bedürfnisse. Der Vorteil beider genannter Verfahren ist auch, es entsteht nämlich durch den manuellen Eingriff auf jeweils eine der beiden Elemente der Klimatisierungseinheit für Fahrzeugsitze, eine indirekte Rückkopplung auf die Sitzheizung bzw. die Sitzventilation, weil der übrige andere Bestandteil, nämlich entweder die Sitzheizung oder die Ventilationseinrichtung oberflächentemperaturgeführt wird. Somit wird automatischer Betrieb mit manuellem Eingriff kombiniert, wobei der automatische Betrieb noch temperaturgeregelt wird, was überdies verhindert, daß eine übermäßige, ggf. sogar dauerhafte Sitzunterkühlung herbeigeführt werden kann. In Ausgestaltung der beiden Verfahren, d. h. die beiden Verfahren betreffend, kann die Regelung der jeweils automatisch geregelten Komponente des Klimatisierungssystems, also entweder der Ventilationseinrichtung oder der Sitzheizung in Abhängigkeit vom Ausgangssignal eines Feuchtesensors geregelt sein.

Die Hinzunahme des Feuchtesensors komplettiert das gesamte System. So kann beispielsweise das Temperatursignal und die daraus regelungstechnisch, elektronisch getroffene Schlussfolgerung durch den ermittelten Feuchtesensorwert entweder revidiert oder zumindest ergänzt überprüft werden. Situationsbedingt können dann sowohl der automatische Regelbetrieb optimiert werden, als auch die manuelle Eingriffnahme. Das gesamte System wird dadurch in seiner Komfortabilität erheblich aufgewertet, extreme, wie eine dauerhafte, gesundheitsgefährdende Sitzunterkühlung wird vermieden, wobei aber dennoch individuelle, subjektive Bedürfnisse berücksichtigbar sind.

Hinsichtlich der erfindungsgemäßen Einrichtungen sind diese zur Durchführung der genannten Verfahren appliziert. Die Ventilationseinrichtung ist dabei über manuelle Eingabeeinheiten betätigbar bzw. einstellbar, und die Sitzheizung mit einem Regler verbunden, dessen Eingangsgröße von einem Oberflächentemperaturfühler am jeweiligen Sitz abgenommen wird.

Bei einer Einrichtung gemäß Anspruch 5 wird die Sitzheizung gesondert manuell getätigt, über eine entsprechende Betätigungseinrichtung, und die Ventilationseinrichtung ist zur automatischen Betätigung mit dem Regler verbunden, der in Abhängigkeit von der Oberflächentemperatur des jeweiligen Sitzes geregelt wird.

In beiden Fällen ist die besagte Eingriffnahme eine der Komponenten, die das Sitzklima bestimmen, gegeben und damit sind die oben genannten Vorteile umsetzbar.

In weiterer vorteilhafter Ausgestaltung der erfindungsgemäßen Einrichtungen sind Feuchtesensoren vorgesehen, die logisch mit dem Regler verschaltet sind. In weiteren vorteilhaften Ausgestaltungen sind die Heiz- und Ventilationseinrichtungen im Sitzkissen des jeweiligen Fahrzeugsitzes integriert angeordnet. Eine weitere Ausgestaltungsmöglichkeit bestünde darin, die besagten Heiz- und Ventilationseinrichtungen des jeweiligen Sitzes in die jeweilige Sitzrückenlehne integriert anzuordnen. In beiden Fällen ist eine raumsparende Integration der zusätzlichen Elemente gegeben.

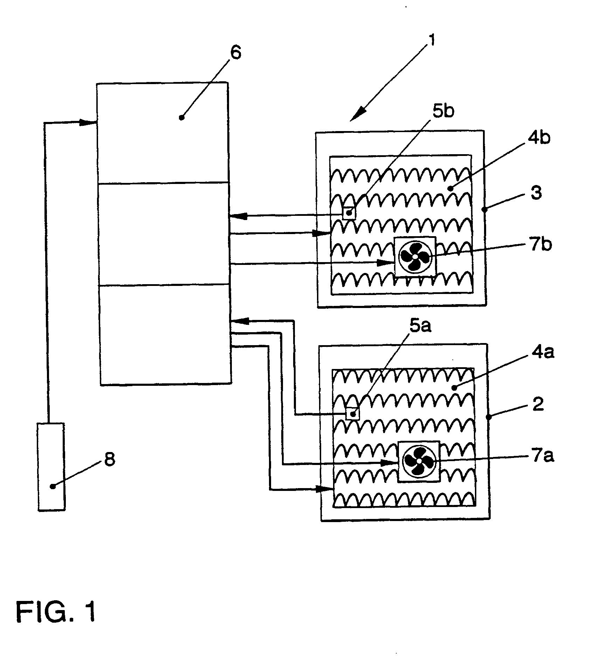

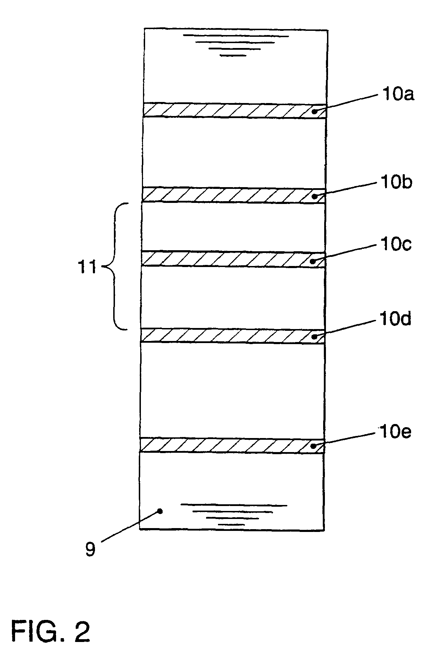

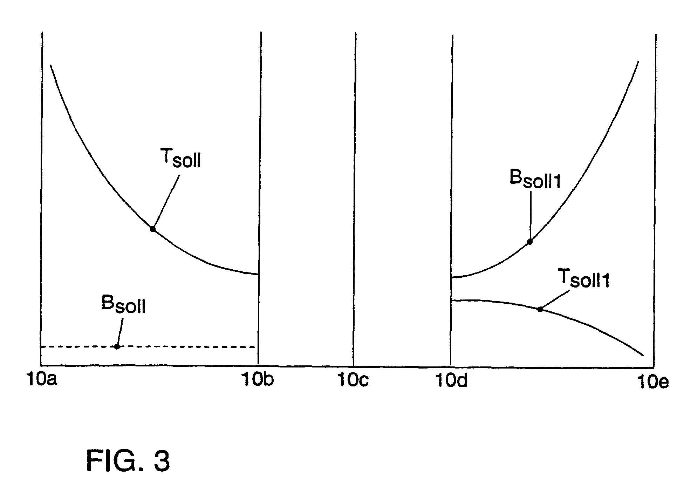

Die Erfindung ist in der Zeichnung dargestellt und nachfolgend näher beschrieben. So zeigt die Abbildung einen angedeuteten Fahrzeugsitz, bestehend aus Sitzrückenlehne 1 und Sitzkissen 2. Innerhalb der Rückenlehne 1 sowie auch dem Sitzkissen 2 sind jeweils ein Temperaturfühler 10 und ein Feuchtesensor 20 angeordnet. Dieselben sind darinnen so plaziert, daß sie möglichst körpernah sowohl die Temperatur, als auch die Feuchte aufnehmen. Zur Messung der Feuchtigkeit bedarf es natürlich einer feuchtigkeittransmittierenden Oberfläche der Sitzkissen bzw. Rückensitzlehne. Wären diese Oberflächen hermetisch abschließend, wie beispielsweise bestimmte Ledersorten, so wäre eine Feuchteermittlung nur schwer möglich.

Die besagten Sensoren, d.h. Temperaturfühler 10 und Feuchtesensor 20, sind signalseitig mit dem Regler 3 verbunden. Des weiteren ist der Regler wiederum mit einer manuellen Eingabe 4 verbunden, über den auch ein manueller Eingriff auf das Regelverhalten genommen werden kann. Ausgangsseitig, d. h. stellmittelseitig ist der Regler 3 mit der Heizung 5 und mit der Ventilationseinrichtung 6 verbunden.

Die Verfahrensweise wird in der oben bereits dargestellten Form auch hier erkennbar. Der Regler 3 nimmt die Sensorwerte des Temperaturfühlers 10 und des Feuchtesensors 20 bzw. der Temperaturfühler 10 und der Feuchtesensoren 20 auf und wertet dieselben. Darüber hinaus ist über die manuelle Eingabe 4 eine manuelle Beeinflussung entweder der Heizung 5 oder der Ventilationseinrichtung 6 über den Regler 3 möglich. Die Beeinflussung der Heizung 5 sowie die Beeinflussung der Ventilationseinrichtung 6 verändert das Sitzklima im ganzen. Nun ist es möglich, daß eine der beiden Stellmittel, Heizung 5 und Ventilationseinrichtung 6, automatisch geführt wird, während die jeweils andere Komponente aus 5 oder 6 über die manuelle Eingabe 4 beeinflußt wird. So kann beispielsweise die Heizung temperatur- und feuchtegeregelt werden, während die Ventilationseinrichtung 6 über die manuelle Eingabe 4 beeinflußbar ist.

Ebenso ist es möglich, die Ventilationseinrichtung 6 über den Regler 3 und die erfaßten Temperaturfühlerwerte und Feuchtewerte automatisch zu steuem, und die Heizung 5 dagegen über die manuelle Eingabe 4 und den Regler 3 zu beeinflussen. Beide Vorgehensweisen sind denkbar und können durch den gleichen Aufbau dargestellt und realisiert werden. Der Regler 3 als solches muß intelligent ausgestattet sein, was bedeutet, daß er im Sinne von Mustervergleichsverfahren Temperaturfühlerwerte und Feuchtewerte miteinander kombiniert und daraus entsprechende Stellgrößen für die Stellmittel Heizung 5 und Ventilationseinrichtung 6 bereitstellt.

Durch die zusätzliche Einflußnahme auf manuelle Weise registriert der entsprechend intelligente Regler 3 die entsprechende Einflußnahme und regelt nur noch eine Komponente der Stellmittel, d. h. Heizung 5 oder Ventilationseinrichtung 6, je nachdem, welche andere Komponente manuell gesteuert wird. Auf diese Weise eröffnet sich für den Benutzer die Einflußnahme in einer Weise, daß er zwar die Vorzüge einer automatisch geführten Sitzbeheizung bzw. Sitzklimatisierung genießen kann, aber eine übermäßig starke Abkühlung vermeiden kann.

Die Stellmittel, wie Heizung 5 und Ventilationseinrichtung 6 sowie ggf. auch der Regler 3, können im Fahrzeugsitz integriert angeordnet sein, d. h. entweder in der Sitzrückenlehne 1 oder im Sitzkissen 2. Die manuelle Eingabe 4 kann dabei am Sitz angeordnet sein oder aber in der Armaturentafel des Fahrzeuges. Die gesamte Anordnung kann natürlich über ein Multifunktionsbedienelement geführt werden und die dortige manuelle Eingabe 4 in einer entsprechenden Weise realisiert werden.

Darüber hinausgehend ist es auch möglich den Regler 3 auszulagern, da eine einfache Möglichkeit des Miteinanderverbindens beispielsweise durch die Verwendung eines fahrzeugintemen Datenbusses gegeben ist.

## Patentansprüche

1. Verfahren zur Steuerung der Klimatisierung eines Kraftfahrzeugsitzes, bei welchem der Sitz sowohl beheizt, als auch mittels Ventilationseinrichtung durchlüftet werden kann,
**dadurch gekennzeichnet,**
**daß** die Ventilationseinrichtung gesondert manuell betätigt wird, und der Betrieb der Sitzheizung automatisch, in Abhängigkeit von einer gemessenen Sitzoberflächentemperatur geregelt wird.

2. Verfahren zur Steuerung der Klimatisierung eines Kraftfahrzeugsitzes, bei welchem der Sitz sowohl beheizt, als auch mittels Ventilationseinrichtung durchlüftet werden kann,
**dadurch gekennzeichnet,**
**daß** die Sitzheizung gesondert manuell betätigt wird und der Betrieb der Ventilationseinrichtung automatisch in Abhängigkeit von der jeweils an der Sitzoberfläche ermittelten Oberflächentemperatur geregelt wird.

3. Verfahren nach Anspruch 1 oder 2,
**dadurch gekennzeichnet,**
**daß** die Regelung in Abhängigkeit von Ausgangssignalen eines Feuchtesensors beeinflusst wird.

4. Einrichtung zur Steuerung der Klimatisierung eines Kraftfahrzeugsitzes, bei welchem der Sitz über Heizelemente sowohl beheizbar, als auch über eine Ventilationseinrichtung durchlüftbar ist,
**dadurch gekennzeichnet,**
**daß** die Ventilationseinrichtung über eine manuelle Eingabe (4) betätig- bzw. einstellbar ist, und die Sitzheizung (5) mit einem Regler (3), dessen Eingangsgröße von einem Oberflächentemperaturfühler (10) stammt, verschaltet ist.

5. Einrichtung zur Steuerung der Klimatisierung eines Kraftfahrzeugsitzes, bei welchem der Sitz über Heizelemente sowohl beheizbar, als auch über eine Ventilationseinrichtung durchlüftbar ist,
**dadurch gekennzeichnet,**
**daß** die Sitzheizung (5) über eine manuelle Eingabe (4) betätig- bzw. einstellbar ist und die Ventilationseinrichtung (6) mit einem Regler (3), dessen Eingangsgröße von einem Oberflächentemperaturfühler (10) stammt, verschaltet ist.

6. Einrichtung nach Anspruch 4 oder 5,
**dadurch gekennzeichnet,**
**daß** ein Feuchtesensor (20) vorgesehen ist, welcher logisch mit dem Regler (3) verschaltet ist.

7. Einrichtung nach einem der vorhergehenden Ansprüche,
**dadurch gekennzeichnet,**
**daß** die Heiz- (5) und Ventilationseinrichtung (6) jeweils im Sitzkissen (2) des betreffenden Fahrzeugsitzes integriert angeordnet sind.

8. Einrichtung nach einem der vorhergehenden Ansprüche,
**dadurch gekennzeichnet,**
**daß** die Heiz- (5) und Ventilationseinrichtung (6) in der Sitzrückenlehne (1) des Fahrzeugsitzes integriert angeordnet sind.

9. Einrichtung nach einem oder mehreren der vorhergehenden Ansprüche,
**dadurch gekennzeichnet,**
**daß** der Regler (3) weitergehende mikroelektronische Elemente zur logischen Bearbeitung im Rahmen von Mustervergleichsverfahren zur Regelung von Heizung (5) und/oder Ventilationseinrichtung (6) aufweist.

## Claims

1. Method for controlling the temperature-control system of a motor-vehicle seat, in which the seat can be both heated, and ventilated by means of a ventilation device,
**characterized**
**in that** the ventilation device is manually operated separately, and the operation of the seat heater is controlled automatically as a function of a measured seat-surface temperature.

2. Method for controlling the temperature-control system of a motor-vehicle seat, in which the seat can be both heated, and ventilated by means of a ventilation device,
**characterized**
**in that** the seat heater is manually operated separately, and the operation of the ventilation device is controlled automatically as a function of the surface temperature respectively determined on the seat surface.

3. Method according to Claim 1 or 2,
**characterized**
**in that** the control system is influenced as a function of output signals from a moisture sensor.

4. Device for controlling the temperature-control system of a motor-vehicle seat, in which the seat can be both heated by means of heating elements and ventilated by means of a ventilation device,
**characterized**
**in that** the ventilation device can be operated and adjusted by means of a manual input (4), and the seat heater (5) is connected to a controller (3) whose input variable originates from a surface-temperature sensor (10).

5. Device for controlling the temperature-control system of a.motor-vehicle seat, in which the seat can be both heated by means of heating elements and ventilated by means of a ventilation device,
**characterized**
**in that** the seat heater (5) can be operated and adjusted by means of a manual input (4), and the ventilation device (6) is connected to a controller (3) whose input variable originates from a surface-temperature sensor (10).

6. Device according to Claim 4 or 5,
**characterized**
**in that** a moisture sensor (20) which is logically connected to the controller (3) is provided.

7. Device according to one of the preceding claims,
**characterized**
**in that** the heating device (5) and the ventilation device (6) are each arranged in integrated fashion in the seat cushion (2) of the vehicle seat in question.

8. Device according to one of the preceding claims,
**characterized**
**in that** the heating device (5) and the ventilation device (6) are arranged in integrated fashion in the backrest (1) of the vehicle seat.

9. Device according to one or more of the preceding claims,
**characterized**
**in that** the controller (3) has more wide-ranging microelectronic elements for logical processing purposes in pattern comparison processes for controlling the heater (5) and/or ventilation device (6).

## Revendications

1. Procédé de commande de la climatisation d'un siège de véhicule automobile, grâce auquel le siège peut non seulement être chauffé mais également être ventilé au moyen d'un dispositif de ventilation, **caractérisé en ce que** le dispositif de ventilation est actionné manuellement de manière séparée et **en ce que** le fonctionnement du chauffage du siège est régulé automatiquement en fonction d'une température de surface de siège mesurée.

2. Procédé de commande de la climatisation d'un siège de véhicule automobile, grâce auquel le siège peut non seulement être chauffé mais également être ventilé au moyen d'un dispositif de ventilation, **caractérisé en ce que** le chauffage de siège est actionné manuellement de manière séparée et **en ce que** le fonctionnement du dispositif de ventilation est régulé automatiquement en fonction d'une température de surface mesurée respectivement à la surface du siège.

3. Procédé selon la revendication 1 ou 2, **caractérisé en ce que** la régulation est influencée par les signaux de sortie d'un capteur d'humidité.

4. Dispositif de commande de la climatisation d'un siège de véhicule automobile, grâce auquel le siège peut non seulement être chauffé par des éléments chauffants, mais aussi être traversé par de l'air soufflé par un dispositif de ventilation, **caractérisé en ce que** le dispositif de ventilation peut être réglé et/ou actionné via une unité de saisie manuelle (4) et **en ce que** le chauffage de siège (5) est raccordé à un régulateur (3) dont la grandeur d'entrée provient d'une sonde de température de surface (10).

5. Dispositif de commande de la climatisation d'un siège de véhicule automobile, grâce auquel le siège peut non seulement être chauffé par des éléments chauffants, mais aussi être traversé par de l'air soufflé par un dispositif de ventilation, **caractérisé en ce que** le chauffage de siège (5) peut être réglé et/ou actionné via une unité de saisie manuelle (4) et **en ce que** le dispositif de ventilation (6) est raccordé à un régulateur (3) dont la grandeur d'entrée provient d'une sonde de température de surface (10).

6. Dispositif selon la revendication 4 ou 5, **caractérisé en ce qu'**on a prévu un capteur d'humidité (20) qui est câblé logiquement avec le régulateur (3).

7. Dispositif suivant l'une quelconque des revendications précédentes, **caractérisé en ce que** les dispositifs de chauffage (5) et ventilation (6) sont respectivement disposés de manière intégrée dans le coussin d'assise (2) du siège concerné du véhicule.

8. Dispositif suivant l'une quelconque des revendications précédentes, **caractérisé en ce que** les dispositifs de chauffage (5) et ventilation (6) sont respectivement disposés de manière intégrée dans le dossier (1) du siège du véhicule.

9. Dispositif suivant l'une ou plusieurs des revendications précédentes, **caractérisé en ce que** le régulateur (3) présente des éléments principalement microélectroniques pour le traitement logique dans le cadre du procédé de comparaison d'échantillons afin de réguler le chauffage (5) et/ou le dispositif de ventilation (6).
